# EUROPEAN PATENT APPLICATION

(11) **EP 4 755 942 A1**
(43) Date of publication of application: **10.06.2026**
(21) Application number: 24881684.5
(22) Date of filing: 24.10.2024
(51) Int. Cl.: C08G 61/08, G02B 1/04

(54) **OPTICAL MATERIAL**

(30) Priority: 25.10.2023 CN 202311396606
(71) Applicant: HANGZHOU RUIFENGRONGCHUANG TECHNOLOGY CO., LTD., Hangzhou, Zhejiang 310020 (CN)
(72) Inventor: XIE, Shan, Hangzhou, Zhejiang 310020 (CN); ZHANG, Jianlin, Hangzhou, Zhejiang 310020 (CN); QIAO, Yingxi, Hangzhou, Zhejiang 310020 (CN); XIE, Tingxin, Hangzhou, Zhejiang 310020 (CN); KONG, Lingyu, Hangzhou, Zhejiang 310020 (CN); FEI, Xiaoyao, Hangzhou, Zhejiang 310020 (CN)
(74) Representative: Grünecker Patent- und Rechtsanwälte PartG mbB
(86) International application number: PCT/CN2024/126993
(87) International publication number: WO 2025/087320

(57) **Abstract**

The present invention relates to the technical field of optical materials, and in particular, to an optical material, comprising a cycloolefin ring-opening hydrogenated copolymer. All structural units of the cycloolefin ring-opening hydrogenated copolymer comprise in percentage by mass: a structural unit derived from a dicyclopentadiene compound in a ratio of 20% to 45%, a structural unit derived from tetracyclododecene and a derivative thereof in a ratio of 30% to 55%, and a structural unit derived from a compound of structural formula (1) in a ratio of 5% to 25%, wherein a ratio of an endo-anti isomer in the compound of structural formula (1) is 70% or more. The optical material has high heat resistance, excellent transparency and high yield toughness.

## Description

### CROSS REFERENCE TO THE RELATED APPLICATIONS

This application is based upon and claims priority to Chinese Patent Application No. 202311396606.7, filed October 25, 2023, the entire contents of which are incorporated herein by reference.

### TECHNICAL FIELD

The present disclosure relates to the technical field of optical materials, and specifically to an optical material.

### BACKGROUND

A cycloolefin ring-opening hydrogenated copolymer, which is obtained by subjecting cycloolefin monomers to ring-opening metathesis polymerization (hereinafter referred to as ROMP) followed by hydrogenation of the resulting copolymers (as disclosed, for example, in Patent Literature 1-5: JP-A-63-21878, JP-A-1-138257, JP-A-1-168725, JP-A-2-102221, and JP-A-2-133413), has been widely utilized in various optical and other applications, such as optical lenses, optical fibers, optical films, and light-transmitting components, due to its excellent transparency, low birefringence, and superior moldability and processability. For instance, Japanese Patent No. JP5141157B2 discloses a cycloolefin ring-opening polymer containing an alicyclic structure and a hydrogenated product thereof, which have excellent properties such as a high glass transition temperature, high strength, and low birefringence, and are suitable for olefin copolymers of various optical films and their manufacturing methods.

In recent years, with the development of peripheral technologies, optical materials used for the molding of optical elements such as lenses have evolved towards lightweight, miniaturization, and high functionality; consequently, there is a requirement not only for an appropriate refractive index but also for the molded products to remain resistant to fracture even when thin (i.e., exhibiting excellent yield toughness) while maintaining transparency. Meanwhile, for optical elements used in high-end camera modules (such as 3D cameras, drones, periscope cameras, vehicle-mounted cameras, etc.), more stringent standards have been proposed, requiring the maintenance of stable mechanical strength and light transmittance to achieve reliable operation even in extreme cold (-40°C), heat (85°C), and humid environments. It can be seen that the high-temperature stability of the material is also one of the important factors that need to be considered.

Japanese Patent Literature JP-A-2007-137935 discloses a hydrogenated cyclic olefin ring-opening polymer comprising a repeating unit derived from tetracyclododecene and a repeating unit derived from other norbornene-based monomers; although the polymer exhibits excellent dimensional stability at high temperatures and is applicable to optical materials for automotive interiors, its moldability is prone to deterioration, with fine lines appearing clearly in certain regions, thus failing to achieve a balance among moldability, heat resistance, and strength.

Japanese Patent No. JP6674156B2 discloses a hydrogenated tetracyclododecene-based ring-opening polymer and method for producing same, which has a high melting point and high glass transition temperature, and exhibits excellent crystallinity, high heat resistance, and processability even after undergoing thermal history such as a melt forming process. Investigations into the meso-form of the tetracyclododecene series have revealed that when the ratio of meso diads is 65% or more, the polymer may suitably be used as a forming material for various applications due to its isotactic structure and high crystallization rate; however, its high degree of crystallinity inevitably leads to the deterioration of properties such as transparency and yield toughness of the molded resin.

Japanese Patent Literature Showa 60(1985)-26024 discloses hydrogenated tetracyclododecene homopolymers and copolymers thereof with norbomene; the polymers disclosed therein, produced according to the methods described in the patent, possess a high glass transition temperature and high hardness, making them suitable as base materials for optical recording media such as optical discs and phonograph records. Nevertheless, the inherent toughness of such polymers is poor, rendering them prone to fracture.

### SUMMARY

In view of the technical problems existing in the prior art, the present disclosure provides an optical material comprising a cycloolefin ring-opening hydrogenated copolymer; by controlling the proportions of various structural units and a ratio of an endo-anti isomer in the compound of structural formula (1), the optical material is rendered to possess high heat resistance, excellent transparency, and high yield toughness, while being easily processed and molded.

In order to solve the existing problems, the inventors have conducted in-depth research on the structural units of the cycloolefin ring-opening hydrogenated copolymer, the isomers of the respective polymerized monomers, and the polymer characteristics (such as molecular weight). As a result, it has been found that the cycloolefin ring-opening hydrogenated copolymer comprises a structural unit derived from a dicyclopentadiene compound, a structural unit derived from tetracyclododecene and a derivative thereof, and a structural unit derived from the compound of structural formula (1), wherein the structural unit derived from dicyclopentadiene accounts for 20-45% of the total amount of repeating units, the structural unit derived from tetracyclododecene accounts for 30-55% of the total amount of repeating units, and the structural unit derived from the compound of structural formula (1) accounts for 5-25% of the total amount of repeating units; furthermore, the weight-average molecular weight thereof is 20,000 to 150,000, and a ratio of the endo-anti isomer in the compound of structural formula (1) is 70% or more. By subjecting the cycloolefin ring-opening copolymer to hydrogenation followed by molding the resulting hydrogenated product, an optical material exhibiting excellent properties in glass transition temperature, refractive index, transparency, and yield strength is obtained, while being easily processed and molded. The inventors have discovered that the introduction of the structural unit of the compound of structural formula (1), and particularly, the control of the ratio of the endo-anti isomer in the compound of structural formula (1), can significantly improve the yield strength of the material and enhance its transparency. This is attributed to the multi-ring groups carried therein; by introducing large sterically hindered structure such as cyclic or multi-ring structure into the polymer structure, beneficial effects on the yield strength and transparency of the material are achieved due to its inherent steric hindrance effects and degrees of freedom. Furthermore, the endo-anti isomer itself possesses higher degrees of freedom and optical rotation, and the structural formula (1) exhibits more appropriate monomer activity during the polymerization process; when polymerized with dicyclopentadiene compound and tetracyclododecene compound, comparable reactivity ratios of each monomer can be realized, achieving control over the random structure of the copolymer, thereby leading to significant improvements in properties such as transparency and yield toughness of the optical material.

An optical material comprising a cycloolefin ring-opening hydrogenated copolymer, all structural units of the cycloolefin ring-opening hydrogenated copolymer comprise in percentage by mass: a structural unit (A) derived from the dicyclopentadiene compound in a ratio of 20% to 45%, a structural unit (B) derived from tetracyclododecene and a derivative thereof in a ratio of 30% to 55%, and a structural unit (C) derived from a compound of structural formula (1) in a ratio of 5% to 25%, a ratio of the endo-anti isomer in the compound of structural formula (1) is 70% or more;

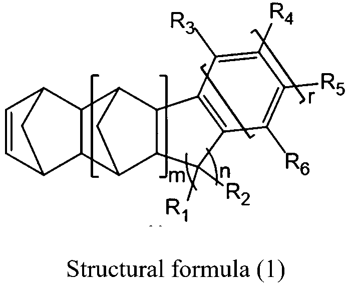

In the structural formula (1), n represents 0 to 10, m represents 0, 1, or 2, and r represents 0, 1, 2, or 3; in the structural formula (1), each of R₁ to R₆ independently represents a hydrogen atom, a hydrocarbon group having 1 to 20 carbon atoms, a halogen atom other than a fluorine atom, or a hydrocarbon group having 1 to 20 carbon atoms substituted with a halogen atom other than a fluorine atom.

Preferably, the ratio of the endo-anti isomer in the compound of structural formula (1) is 80% or more. If the ratio of the endo-anti isomer is low, the degree of freedom of the resulting cycloolefin ring-opening hydrogenated copolymer is significantly reduced, which adversely affects the transparency and yield strength.

Preferably, in the structural formula (1), when r=0 or 1, one pair or several pairs among R₃ and R₄, R₄ and R₅, and R₅ and R₆ are optionally bonded to each other to form a monocyclic or polycyclic ring. Further preferably, the monocyclic or polycyclic ring may contain an unsaturated bond such as a double bond.

Preferably, in the structural formula (1), when r=2 or 3, one pair or several pairs among R₃ and R₃, R₃ and R₄, R₄ and R₅, R₅ and R₆, and R₆ and R₆ are optionally bonded to each other to form a monocyclic or polycyclic ring. Further preferably, the monocyclic or polycyclic ring may contain an unsaturated bond such as a double bond.

Preferably, the monocyclic or polycyclic ring and R₁ or R₂ are optionally bonded to each other to form a monocyclic or polycyclic ring.

Preferably, the monocyclic or polycyclic ring is an aliphatic ring or an aromatic ring.

Preferably, the weight-average molecular weight of the copolymer is 20,000 to 150,000.

Preferably, the tetracyclododecene and the derivative thereof comprise at least one compound selected from the group consisting of tetracyclo[4.4.0.12,5.17,10]-3-dodecene,
8-methoxycarbonyltetracyclo[4.4.0.12,5.17,10]-3-dodecene,
8-ethoxycarbonyltetracyclo[4.4.0.12,5.17,10]-3-dodecene,
8-n-propoxycarbonyltetracyclo[4.4.0.12,5.17,10]-3-dodecene,
8-isopropoxycarbonyltetracyclo[4.4.0.12,5.17,10]-3-dodecene,
8-n-butoxycarbonyltetracyclo[4.4.0.12,5.17,10]-3-dodecene,
8-phenoxycarbonyltetracyclo[4.4.0.12,5.17,10]-3-dodecene,
8-methyl-8-methoxycarbonyltetracyclo[4.4.0.12,5.17,10]-3-dodecene,
8-methyl-8-ethoxycarbonyltetracyclo[4.4.0.12,5.17,10]-3-dodecene,
8-methyl-8-n-propoxycarbonyltetracyclo[4.4.0.12,5.17,10]-3-dodecene,
8-methyl-8-isopropoxycarbonyltetracyclo[4.4.0.12,5.17,10]-3-dodecene,
8-methyl-8-n-butoxycarbonyltetracyclo[4.4.0.12,5.17,10]-3-dodecene,
8-methyltetracyclo[4.4.0.12,5.17,10]-3-dodecene,
8-cyclohexyltetracyclo[4.4.0.12,5.17,10]-3-dodecene,
8-methyl-8-(4-phenylphenoxy)carbonyltetracyclo[4.4.0.12,5.17,10]-3-dodecene, and
8-ethylidenetetracyclo[4.4.0.12,5.17,10]-3-dodecene.

Preferably, the dicyclopentadiene compound comprises at least one compound selected from the group consisting of dicyclopentadiene, methyldicyclopentadiene, dimethyldicyclopentadiene, ethyldicyclopentadiene, vinyldicyclopentadiene, propenyldicyclopentadiene, and the like.

Preferably, the ratio of the structural unit (A) derived from dicyclopentadiene compound is 25% to 43%, and more preferably 28% to 40%. If the ratio of the structural unit (A) derived from dicyclopentadiene compound increases, there is a risk that a cycloolefin ring-opening hydrogenated copolymer having a high glass transition temperature and high transparency cannot be obtained. If the ratio of the the structural unit (A) derived from dicyclopentadiene compound decreases, it may lead to a risk of difficulty in the molding and processing of the cycloolefin ring-opening hydrogenated copolymer.

Preferably, the ratio of the structural unit (B) derived from tetracyclododecene and the derivative thereof is 33% to 52%, and more preferably 35% to 50%. If the ratio of the structural unit (B) derived from tetracyclododecene and the derivative thereof decreases, there is a risk that a cycloolefin ring-opening hydrogenated copolymer having a high glass transition temperature and high transparency cannot be obtained; if the ratio of the structural unit (B) derived from tetracyclododecene and the derivative thereof increases, there is a risk that a cycloolefin ring-opening hydrogenated copolymer having high yield strength cannot be obtained, and meanwhile, it may also lead to difficulties in processing and molding. By controlling the specific ratio of the structural unit (B), the cycloolefin ring-opening hydrogenated copolymer of the present disclosure achieves an excellent balance between transparency and heat resistance, thereby exhibiting excellent processability, transparency, and heat resistance.

Preferably, the ratio of the structural unit (C) derived from the compound of structural formula (1) is 10% to 23%, and more preferably 12% to 22%. If the ratio of the structural unit (C) derived from a compound of structural formula (1) decreases, there is a risk that a cycloolefin ring-opening hydrogenated copolymer having high transparency and high yield strength cannot be obtained; if the ratio of the structural unit (C) derived from a compound of structural formula (1) increases, there is a risk that a cycloolefin ring-opening hydrogenated copolymer having a high glass transition temperature cannot be obtained, and meanwhile, it may also lead to difficulties in processing and molding. By controlling the ratio of the structural unit (C), the cycloolefin ring-opening hydrogenated copolymer of the present disclosure achieves an excellent balance between transparency and yield strength, thereby exhibiting excellent processability, transparency, and yield strength.

It is known that the compound of structural formula (1) that is used as the monomer includes an endo-anti stereoisomer, an endo-syn stereoisomer, an exo-anti stereoisomer, and an exo-syn stereoisomer. The compound of structural formula (1) normally includes an endo-anti stereoisomer and an exo-syn stereoisomer as the main components, and the content of an endo-syn stereoisomer and an exo-anti stereoisomer is equal to or less than the detection limit when determined by spectral analysis. The exo-syn isomer exhibits low monomer activity and low inherent degrees of freedom; on one hand, it is difficult to polymerize, and the degree of polymerization is low, and on the other hand, it tends to form self-polymerization and cross-linked products during polymerization, thereby leading to a significant reduction in the transparency of the material.

The weight-average molecular weight (Mw) of the cycloolefin ring-opening hydrogenated copolymer of the present disclosure is 20,000 to 150,000, preferably 30,000 to 120,000, and more preferably 35,000 to 100,000. If the Mw is too low, the mechanical strength decreases; if the Mw is too high, molding becomes difficult, which may lead to adverse effects on the relevant properties of the material.

A method for producing the cycloolefin ring-opening hydrogenated copolymer of the present disclosure is not particularly limited. For example, the target cycloolefin ring-opening hydrogenated copolymer can be obtained by subjecting the dicyclopentadiene compound, tetracyclododecene and derivatives thereof, and the monomer of structural formula (1) to a ring-opening polymerization reaction in the presence of a polymerization catalyst, and subsequently, hydrogenating unsaturated bonds such as carbon-carbon double bonds of the resulting cycloolefin ring-opening copolymer in the presence of a hydrogenation catalyst.

The monomer of structural formula (1) used for ring-opening metathesis polymerization can be synthesized primarily through a Diels-Alder reaction ([4+2] cycloaddition reaction). The compound of structural formula (1) as a raw material for the cycloolefin polymer may also be synthesized using other conventionally known methods.

As the ring-opening metathesis polymerization catalyst, catalysts known in the prior art can be used, and examples thereof include: a catalyst system composed of a halide, a nitrate, or an acetylacetonate compound of a metal selected from ruthenium, rhodium, palladium, osmium, iridium, platinum, and the like, and a reducing agent; a catalyst system composed of a halide or an acetylacetonate compound of a metal selected from titanium, vanadium, zirconium, tungsten, and molybdenum, and an organoaluminum compound as a cocatalyst; or active ring-opening metathesis catalysts disclosed in Japanese Patent Literature Heisei 7(1995)-179575A, J. Am. Chem. Soc., 1986, 108, 733, J. Am. Chem. Soc., 1993, 115, 9858, and J. Am. Chem. Soc., 1996, 118, 100, etc. These catalysts may be used independently or in combination of two or more thereof. The amount of the catalyst used, in terms of the mass ratio of (central metal of the catalyst) : (cycloolefin-based monomer), is usually 1:50 to 1:2,000,000, preferably 1:200 to 1:1,000,000, and more preferably 1:500 to 1:500,000. When the amount of the catalyst is too large, subsequent removal becomes difficult, and when the amount is too small, sufficient catalytic activity cannot be obtained.

For the purpose of adjusting the molecular weight of the resulting ring-opening polymer during the ring-opening polymerization reaction, an appropriate amount of a molecular weight regulator such as a vinyl compound or a diene compound may be added to the polymerization reaction system. The vinyl compound used for molecular weight adjustment is not particularly limited as long as the vinyl compound is an organic compound that includes a vinyl group. Examples of the vinyl compound include an alpha-olefin such as 1-butene, 1-pentene, 1-hexene, and 1-octene; styrene and a derivative thereof, such as styrene and vinyltoluene; an ether such as ethyl vinyl ether, isobutyl vinyl ether, and allyl glycidyl ether; a halogen-containing vinyl compound such as allyl chloride; an oxygen-containing vinyl compound such as allyl acetate, allyl alcohol, and glycidyl methacrylate; a nitrogen-containing vinyl compound such as acrylamide; and the like. Examples of the diene compound used for molecular weight adjustment include a non-conjugated diene such as 1,4-pentadiene, 1,4-hexadiene, 1,5-hexadiene, 1,6-heptadiene, 2-methyl-1,4-pentadiene, and 2,5-dimethyl-1,5-hexadiene; a conjugated diene such as 1,3-butadiene, 2-methyl-1,3-butadiene, 2,3-dimethyl-1,3-butadiene, 1,3-pentadiene, and 1,3-hexadiene; and the like. The added amount of the molecular weight regulator may be any amount sufficient to obtain a polymer having a desired molecular weight, and a mass ratio of (molecular weight regulator) : (total monomers) is usually 1:20 to 1:1,000,000, preferably 1:20 to 1:3,000, and more preferably 1:20 to 1:1,000.

Organic solvents are generally required for conducting the ring-opening polymerization reaction. The organic solvent to be used is not particularly limited as long as the organic solvent does not adversely affect the polymerization reaction and is capable of dissolving or dispersing the resulting polymer under prescribed conditions. Specific examples of the organic solvent include an aliphatic hydrocarbon-based solvent such as pentane, hexane, and heptane; an alicyclic hydrocarbon-based solvent such as cyclopentane, cyclohexane, methylcyclohexane, dimethylcyclohexane, trimethylcyclohexane, ethylcyclohexane, diethylcyclohexane, decahydronaphthalene, bicycloheptane, tricyclodecane, hexahydroindenecyclohexane, and cyclooctane; an aromatic hydrocarbon-based solvent such as benzene, toluene, and xylene; a halogen-containing aliphatic hydrocarbon-based solvent such as dichloromethane, chloroform, and 1,2-dichloroethane; a halogen-containing aromatic hydrocarbon-based solvent such as chlorobenzene and dichlorobenzene; a nitrogen-containing hydrocarbon-based solvent such as nitromethane, nitrobenzene, and acetonitrile; an ether-based solvent such as diethyl ether and tetrahydrofuran; an aromatic ether-based solvent such as anisole and phenetole; and the like. Among these, an aromatic hydrocarbon-based solvent, an aliphatic hydrocarbon-based solvent, an alicyclic hydrocarbon-based solvent, an ether-based solvent, and an aromatic ether-based solvent, which are commonly used in industry, are preferable.

The temperature for conducting the ring-opening polymerization reaction needs to be strictly controlled, and the polymerization temperature is normally set to -20 to 100°C, preferably 20 to 80°C, and more preferably 30 to 60°C. If the polymerization temperature is too low, the reaction rate will decrease; if it is too high, side reactions may occur, broadening the molecular weight distribution, and it becomes necessary to control the temperature in stages.

The time for conducting the ring-opening polymerization reaction is generally not particularly limited; the polymerization time is normally set to 1 minute to 100 hours, and preferably 0.5 to 24 hours.

The polymerization pressure during the ring-opening polymerization reaction is not particularly limited; when conducted under pressurized conditions, the pressure is normally set to 2 MPa or less, and preferably 1 MPa or less.

The ring-opening polymerization may be conducted in an atmosphere of an inert gas such as nitrogen or argon, so as to prevent deterioration and coloration of the resulting polymer due to oxidation.

The polymerization monomers and solvents used in the present disclosure are all subjected to rigorous dehydration treatment, and the water content therein is controlled to be 50 ppm or less.

The hydrogenation reaction of the cycloolefin ring-opening copolymer obtained through polymerization is a reaction in which all unsaturated bonds, such as carbon-carbon double bonds and benzene rings, existing in the main chain and/or side chains of the copolymer are completely hydrogenated. The hydrogenation reaction is conducted by adding a hydrogenation catalyst to the ring-opening copolymer in an inert solvent and supplying hydrogen gas to the reaction system.

Examples of the hydrogenation catalyst include a hydrogenation catalyst that includes a dicyclopentadienyltitanium halide, a nickel organic carboxylate, a cobalt organic carboxylate, or the like, and an organometallic compound that includes a metal that belongs to main-group I, II, or III in the periodic table; a metal catalyst such as nickel, platinum, palladium, ruthenium, rhenium, or rhodium supported on carbon, silica, diatomaceous earth, or the like, a cobalt complex, a nickel complex, a rhodium complex, and a ruthenium complex; a hydrogenated compound such as lithium aluminum hydride and p-toluenesulfonyl hydrazide; and the like. Among these, from the viewpoint of reducing isomerization and improving yield, a ruthenium compound is preferred as the hydrogenation catalyst. Therein, the amount of the hydrogenation catalyst used, in terms of the mass ratio of (hydrogenation catalyst) : (polymer double bonds), is usually 1:5 to 1:100,000, and preferably 1:5 to 1:10,000. Examples of the ruthenium compound include RuHCl(CO)(PPh₃)₃, RuHCl(CO)[P(p-Me-Ph)₃]₃, RuHCl(CO)(PCy₃)₂, RuHCl(CO)[P(n-Bu)₃]₃, RuHCl(CO)[P(i-Pr)₃]₂, RuH₂(CO)(PPh₃)₃, RuH₂(CO)[P(p-Me-Ph)₃]₃, RuH₂(CO)(PCy₃)₃, RuH₂(CO)[P(n-Bu)₃]₃, RuH(OCOCH₃)(CO)(PPh₃)₂, RuH(OCOPh)(CO)(PPh₃)₂, RuH(OCOPh-CH₃)(CO)(PPh₃)₂, RuH(OCOPh-OCH₃)(CO)(PPh₃)₂, RuH(OCOPh)(CO)(PCy₃)₂, and the like.

As the inert organic solvent used in the hydrogenation reaction, examples include an aliphatic hydrocarbon-based solvent, an alicyclic hydrocarbon-based solvent, an aromatic hydrocarbon-based solvent, a halogenated aromatic hydrocarbon-based solvent, a nitrogen-containing hydrocarbon-based solvent, an ether-based solvent, and the like.

The hydrogenation temperature is selected taking account of the type of hydrogenation catalyst. The hydrogenation temperature is normally set to -20°C to 300°C, and preferably 0°C to 250°C. If the hydrogenation temperature is too low, the reaction rate may decrease. If the hydrogenation temperature is too high, a side reaction may occur.

The hydrogen pressure for conducting the hydrogenation reaction is normally set to 0.01 to 20 MPa, preferably 0.1 to 10 MPa, and more preferably 1 to 5 MPa. If the hydrogen pressure is too low, the hydrogenation reaction rate may decrease. If the hydrogen pressure is too high, a high-pressure resistant reactor is required.

The hydrogenation rate of the unsaturated bonds in the cycloolefin ring-opening hydrogenated copolymer is preferably 90% or more, more preferably 95% or more, further preferably 99% or more, and particularly preferably 99.5% or more. Within the above-mentioned range, coloration of a molded body caused by resin sintering can be suppressed.

It should be noted that, after completion of the hydrogenation reaction, the resulting norbomene-based hydrogenated ring-opening polymer may be collected using an ordinary method; during the collection of the hydrogenated product, the residual catalyst may be removed by filtration or the like.

### <Molding and Processing>

An optical material is obtained by molding a raw material containing the above-mentioned cycloolefin ring-opening hydrogenated copolymer.

Therein, the raw material of the optical material may contain a polymer material and an additive, without particular limitation. It is preferable to contain an antioxidant such as a phenolic antioxidant, a phosphorus-based antioxidant, or a sulfur-based antioxidant, and the like. It should be noted that, as long as the polymer material and the additive can be sufficiently dispersed in the cycloolefin ring-opening hydrogenated copolymer, the types of the polymer material and the additive are not particularly limited, and any method may be used for mixing with the cycloolefin ring-opening hydrogenated copolymer. Specifically, the polymer material and the additive may be added at any stage during the preparation of the cycloolefin ring-opening hydrogenated copolymer, or may be mixed with the cycloolefin ring-opening hydrogenated copolymer using a mixer, or may be mixed with the cycloolefin ring-opening hydrogenated copolymer within a molding apparatus.

The molding method for producing the optical material of the present disclosure is not particularly limited, and examples thereof include injection molding, press molding, and extrusion molding, and the like. Among these, in the case where the optical material is used as an optical component or the like, injection molding is preferred from the viewpoint of the capability to obtain a target optical material with high precision.

Regarding the prepared optical material of the present disclosure, the glass transition temperature is 120°C or higher; a total transmittance through a 3 mm specimen is 90% or more based on ASTM-D 1003; and a yield stress measured in a tensile test conducted at a test speed of 2 mm/min based on ISO 527-3 is 60 MPa or more.

The optical material provided by the present disclosure possesses high transparency, high heat resistance, and high yield toughness, and is easy to process and mold, by controlling the proportions of various structural units and the ratio of the endo-anti isomer in the compound of structural formula (1). The optical material of the present disclosure is suitable for use as an optical component such as an optical lens, a prism, a light guide, and a camera module, etc., and is particularly suitable for use as an optical component such as a lens for a camera installed inside an automobile.

### BRIEF DESCRIPTION OF THE DRAWINGS

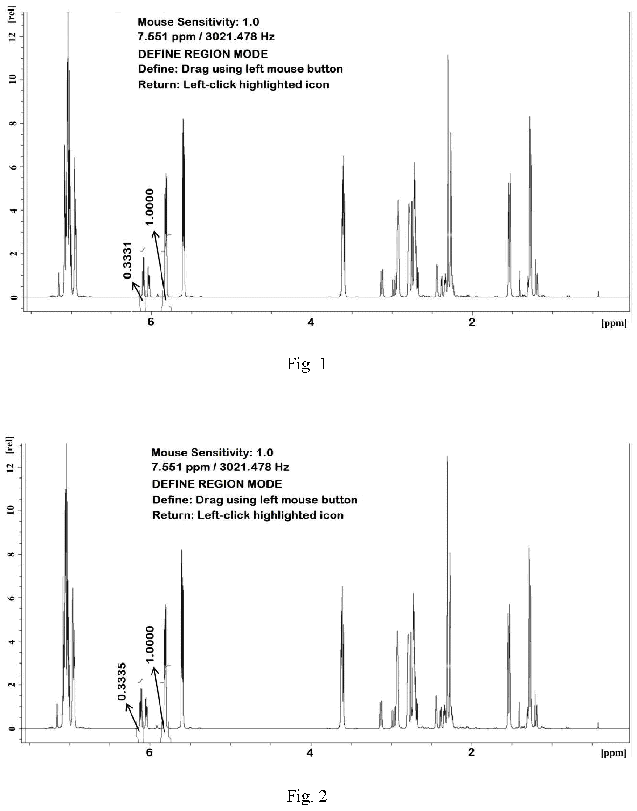

FIG.1 is a ¹H NMR spectrum of the monomer product synthesized in Example 1;
FIG.2 is a ¹H NMR spectrum of the monomer product synthesized in Example 2;

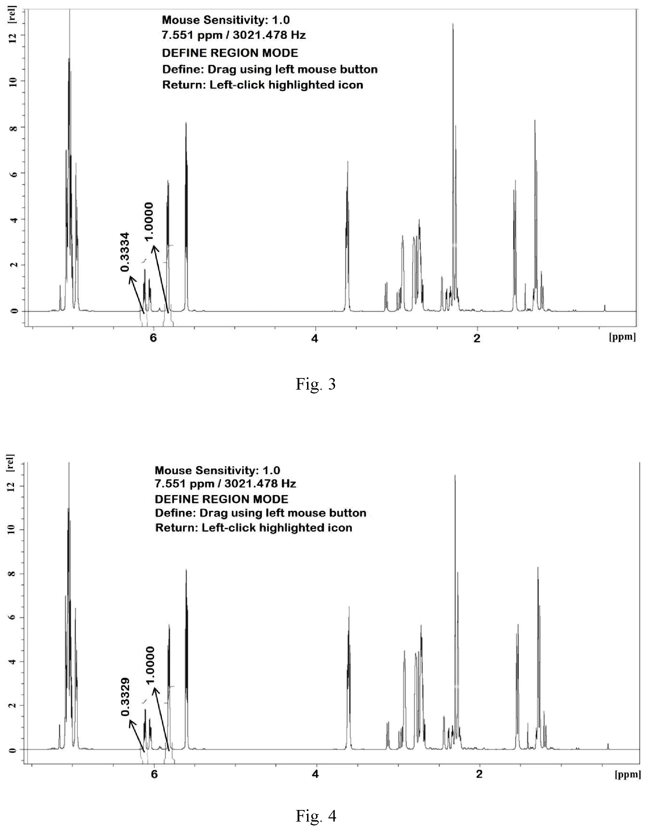

FIG.3 is a ¹H NMR spectrum of the monomer product synthesized in Example 3;
FIG.4 is a ¹H NMR spectrum of the monomer product synthesized in Example 4;

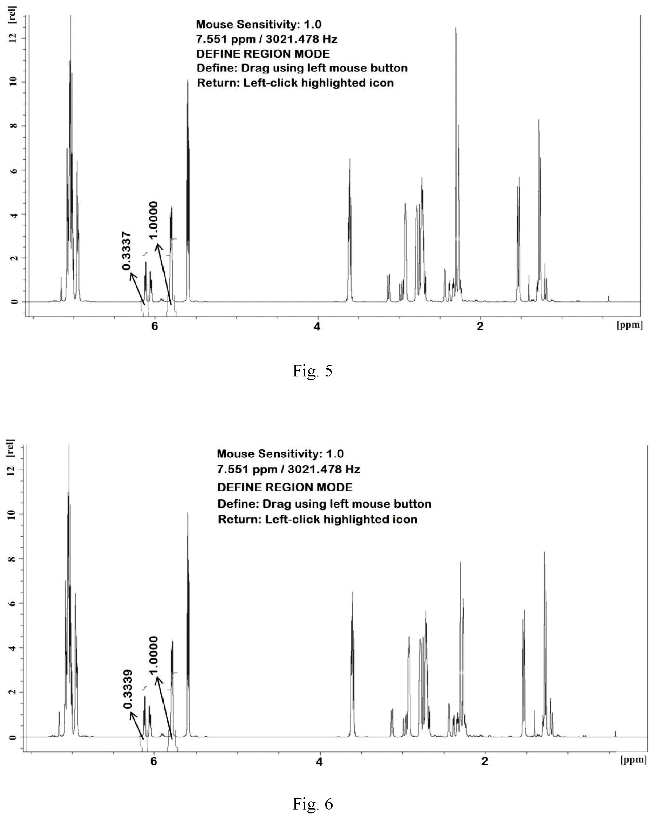

FIG.5 is a ¹H NMR spectrum of the monomer product synthesized in Example 5;
FIG.6 is a ¹H NMR spectrum of the monomer product synthesized in Example 6;

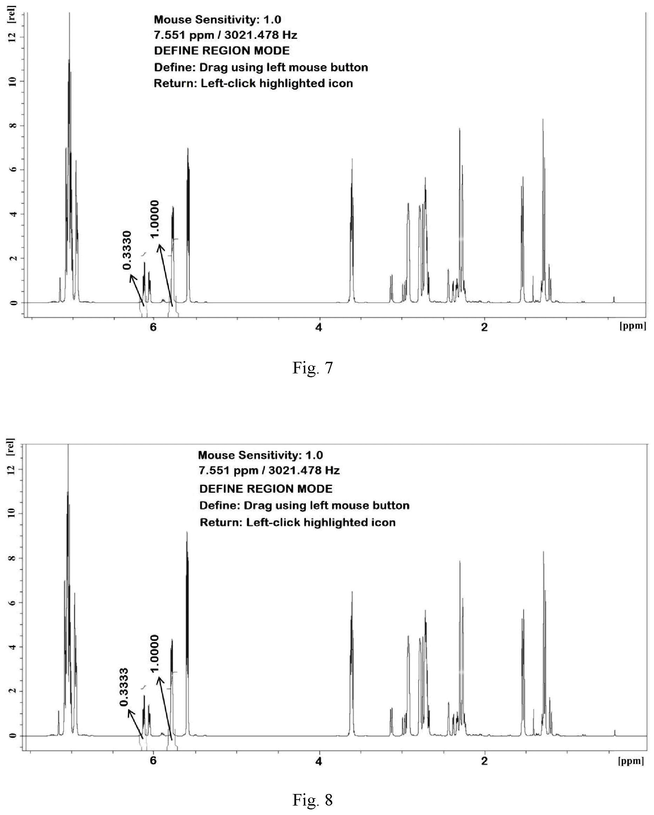

FIG.7 is a ¹H NMR spectrum of the monomer product synthesized in Example 7;
FIG.8 is a ¹H NMR spectrum of the monomer product synthesized in Example 8;

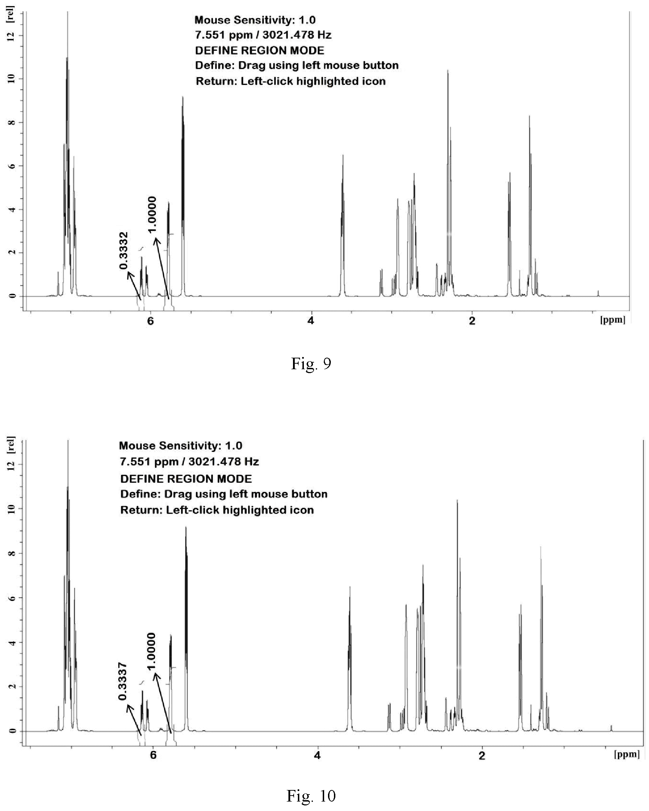

FIG.9 is a ¹H NMR spectrum of the monomer product synthesized in Example 9;
FIG.10 is a ¹H NMR spectrum of the monomer product synthesized in Example 10;

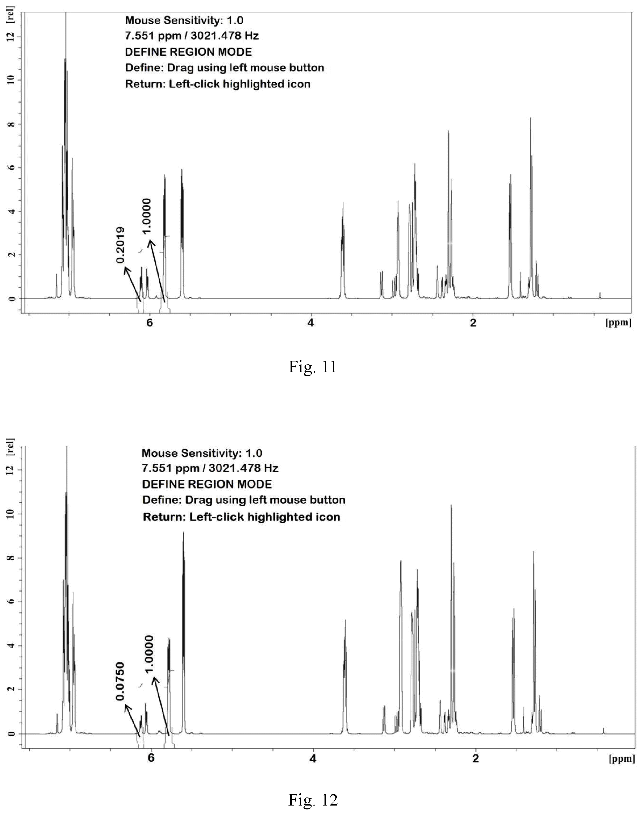

FIG.11 is a ¹H NMR spectrum of the monomer product synthesized in Example 11;
FIG.12 is a ¹H NMR spectrum of the monomer product synthesized in Example 12;

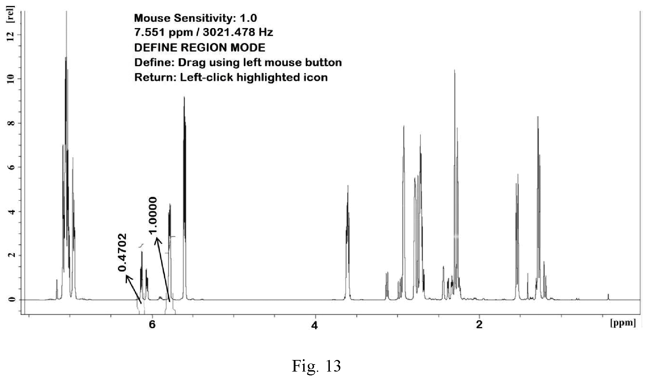

FIG.13 is a ¹H NMR spectrum of the monomer product synthesized in Comparative Example 3.

### DETAILED DESCRIPTION OF THE EMAMPLES

Hereinafter, the present disclosure will be described in more detail by way of examples, but it should be understood that these examples are merely illustrative and are not limited. All other examples obtained by those of ordinary skill in the art based on the examples in the present application without creative labor shall fall within the protection scope of the present application. In addition, unless otherwise specified, "parts" and "%" representing amounts in the following examples are all based on mass.

The raw materials used in the following examples are all commercially available products, except for the compound of structural formula (1) which is a self-synthesized raw material. The polymerization monomers and solvents used in the present disclosure are all subjected to rigorous dehydration treatment, and the water content therein is controlled to be 50 ppm or less.

It should be noted that the property measurement and evaluation of the products obtained below were conducted using the following methods. In addition, in the following description, unless otherwise specified, the weight-average molecular weight (Mw) and number-average molecular weight (Mn) of the cycloolefin ring-opening copolymer were measured by gel permeation chromatography (GPC) using cyclohexane as an eluent, and were determined as a standard polystyrene-equivalent value, and the molecular weight distribution (Mw/Mn) was calculated therefrom. It should be noted that in a case in which the cycloolefin ring-opening copolymer did not dissolve in cyclohexane, the weight-average molecular weight (Mw) and number-average molecular weight (Mn) were measured by gel permeation chromatography (GPC) using tetrahydrofuran as an eluent at a temperature of 40°C, were determined as a standard polystyrene-equivalent value, and the molecular weight distribution (PDI = Mw/Mn) was calculated. Therein, the measurement was conducted using a column manufactured by Agilent (PLgel MIXED-LS) under the conditions of a flow rate of 1.0 mL/min, a sample injection volume of 100 µL, and a column temperature of 40°C.

### Hydrogenation Rate

The hydrogenation rate of the carbon-carbon unsaturated bonds of the aromatic rings and the hydrogenation rate of the chain carbon-carbon unsaturated bonds were determined by ¹H NMR. The instrument used for the NMR test was a Bruker AVANCE III HD 300, and the measurement was conducted using deuterated chloroform at room temperature.

### Measurement of the Contents of the Endo-anti isomer and the Exo-syn isomer

The contents of the endo-anti isomer and the exo-syn isomer were determined by ¹H NMR; the instrument used for the NMR test was a Bruker AVANCE III HD 300, and the measurement was conducted using deuterated chloroform at room temperature.

### Glass Transition Temperature

The glass transition temperature (Tg) of the optical material was measured using a differential scanning calorimeter (produced by METTLER, product name: DSC3) under the condition of a heating rate of 10°C/min.

### Refractive Index

The optical material was molded into a sheet of 5 mm in thickness, and then leaving the sheet in an atmosphere having a temperature of 15°C lower than the glass transition temperature (=Tg - 15°C) of the optical material for 20 hours to serve as a measurement sample. The refractive index (Nd) of the obtained measurement sample was measured at 25° C using a precision refractometer (produced by Shimadzu Corporation, product name: KPR-200, light source = He lamp (wavelength: 587.6 nm).

### Transmittance

A sample with a thickness of 3 mm was prepared, and the total transmittance of the optical material was measured according to ASTM-D 1003.

### Yield Strength

According to the ISO 527-3 standard, the obtained optical material was injection molded into tensile sample by mini-Jet injection molding machine, and a tensile test was conducted at a tensile speed of 2 mm/min to measure the yield strength.

The specific structures of the monomers of structural formula (1) used in the following examples are described as follows:

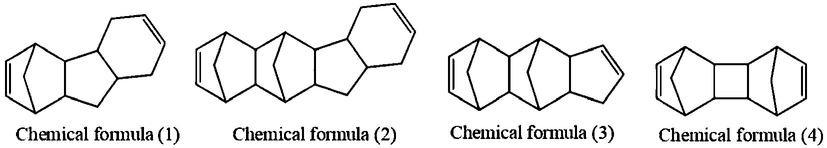

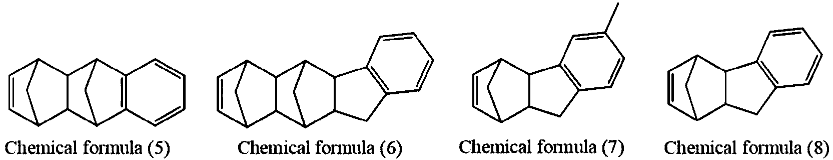

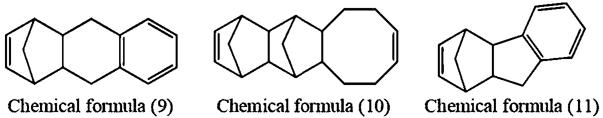

### Example 1

### An optical material:

### <Synthesis of Monomer>

In a reactor that had been internally purged with nitrogen, dicyclopentadiene and tetrahydroindene were sequentially added (a total molar ratio of dicyclopentadiene to tetrahydroindene was 1:4). The reactor was pressurized with nitrogen to 0.05 MPa, and the reaction solution was continuously stirred at 180°C for 2 hours. After completion of the reaction, low-boiling-point impurities were removed by rotary evaporation, followed by one reduced pressure distillation to obtain a white liquid. Finally, the target product, the compound of chemical formula (1), was obtained through one recrystallization purification, with a yield of 81%. The purity of the product was determined to be 98.5% by gas chromatography (GC). The structure was characterized by ¹H NMR; the chemical shift of the characteristic peak for the endo-anti isomer of chemical formula (1) was at 5.83 ppm, while the chemical shift of the characteristic peak for the exo-syn isomer was at 6.08 ppm, and the content of the endo-anti isomer was 75%.

### <Ring-Opening Polymerization>

In a reactor that had been internally purged with nitrogen, 45 parts of dicyclopentadiene as a cycloolefin monomer, 30 parts of 8-methyltetracyclo[4.4.0.12,5.17,10]-3-dodecene, and 25 parts of the above-mentioned compound of chemical formula (1) (in which the ratio of the endo-anti isomer was 75%) were added, followed by the addition of 400 parts of toluene, 0.1 part of triisobutylaluminum, 0.15 part of isobutanol, and 1.2 parts of 1-hexene as a chain transfer agent. To the mixture, 100.5 parts of a 0.48% tungsten hexachloride/toluene solution were added, and the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 53,000, and the molecular weight distribution (PDI) was 1.92.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.9% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 2

### An optical material:

### <Synthesis of Monomer>

In a reactor that had been internally purged with nitrogen, dicyclopentadiene(half of the total amount of dicyclopentadiene) and tetrahydroindene were sequentially added (a molar ratio of total dicyclopentadiene to tetrahydroindene was 1:3). The reactor was pressurized with nitrogen to 0.05 MPa, the remaining amount of dicyclopentadiene was added dropwise for 1 hour, and the reaction solution was continuously stirred at 200°C for 5 hours. After completion of the reaction, low-boiling-point impurities were removed by rotary evaporation, followed by one reduced pressure distillation to obtain a white liquid. Finally, the target product, the compound of chemical formula (2), was obtained through one recrystallization purification, with a yield of 78%. The purity of the product was determined to be 98.4% by gas chromatography (GC). The structure was characterized by ¹H NMR; the chemical shift of the characteristic peak for the endo-anti isomer of chemical formula (2) was at 5.82 ppm, while the chemical shift of the characteristic peak for the exo-syn isomer was at 6.14 ppm, and the content of the endo-anti isomer was 75%.

### <Ring-Opening Polymerization>

In a reactor that had been internally purged with nitrogen, 40 parts of dicyclopentadiene as a cycloolefin monomer, 40 parts of tetracyclo[4.4.0.12,5.17,10]-3-dodecene, and 20 parts of the above-mentioned compound of chemical formula (2) (in which the ratio of the endo-anti isomer was 75%) were added, followed by the addition of 400 parts of cyclooctane, 0.1 part of diethylaluminum, 0.15 part of isobutanol, and 1.2 parts of 1-pentene as a chain transfer agent. To the mixture, 100.5 parts of a 0.48% molybdenum chloride/cyclooctane solution were added, and the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 52,000, and the molecular weight distribution (PDI) was 1.85.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.8% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 3

### An optical material:

### <Synthesis of Monomer>

In a reactor that had been internally purged with nitrogen, dicyclopentadiene and cyclopentadiene were sequentially added (a total molar ratio of dicyclopentadiene to cyclopentadiene was 1:3). The reactor was pressurized with nitrogen to 0.05 MPa, and the reaction solution was continuously stirred at 150°C for 4 hours. After completion of the reaction, low-boiling-point impurities were removed by rotary evaporation, followed by one reduced pressure distillation to obtain a white liquid. Finally, the target product, the compound of chemical formula (3), was obtained through one recrystallization purification, with a yield of 85%. The purity of the product was determined to be 98.8% by gas chromatography (GC). The structure was characterized by ¹H NMR; the chemical shift of the characteristic peak for the endo-anti isomer of chemical formula (3) was at 5.84 ppm, while the chemical shift of the characteristic peak for the exo-syn isomer was at 6.18 ppm, and the content of the endo-anti isomer was 75%.

### <Ring-Opening Polymerization>

In a reactor that had been internally purged with nitrogen, 38 parts of dicyclopentadiene as a cycloolefin monomer, 55 parts of 8-cyclohexyltetracyclo[4.4.0.12,5.17,10]-3-dodecene, and 7 parts of the above-mentioned compound of chemical formula (3) (in which the ratio of the endo-anti isomer was 75%) were added, followed by the addition of 500 parts of cyclooctane, 0.05 part of (1,3-bis-(2,4,6-trimethylphenyl)-2-imidazolidinylidene)dichloro(o-isopropylphenylmethylene)ruthe nium as a catalyst, and 1.2 parts of 1-hexene as a chain transfer agent. And the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 50,000, and the molecular weight distribution (PDI) was 1.82.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.9% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 4

### An optical material:

### <Synthesis of Monomer>

In a reactor that had been internally purged with nitrogen, cyclopentadiene and cyclobutene-based norbornene were sequentially added (a total molar ratio of cyclopentadiene to cyclobutene-based norbornene was 1:4). The reactor was pressurized with nitrogen to 0.05 MPa, and the reaction solution was continuously stirred at 150°C for 2 hours. After completion of the reaction, low-boiling-point impurities were removed by rotary evaporation, followed by one reduced pressure distillation to obtain a white liquid. Finally, the target product, the compound of chemical formula (4), was obtained through one recrystallization purification, with a yield of 84.6%. The purity of the product was determined to be 98.6% by gas chromatography (GC). The structure was characterized by ¹H NMR; the chemical shift of the characteristic peak for the endo-anti isomer of chemical formula (4) was at 5.81 ppm, while the chemical shift of the characteristic peak for the exo-syn isomer was at 6.14 ppm, and the content of the endo-anti isomer was 75%.

### <Ring-Opening Polymerization>

In a reactor that had been internally purged with nitrogen, 43 parts of dicyclopentadiene as a cycloolefin monomer, 35 parts of tetracyclo[4.4.0.12,5.17,10]-3-dodecene, and 22 parts of the above-mentioned compound of chemical formula (4) (in which the ratio of the endo-anti isomer was 75%) were added, followed by the addition of 500 parts of toluene, 0.02 part of dichloro[1,3-bis(2,4,6-trimethylphenyl)-2-imidazolidinylidene](benzylidene)bis(3-bromopyridine)r uthenium(II) as a catalyst, and 1.2 parts of 1-hexene as a chain transfer agent. And the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 52,000, and the molecular weight distribution (PDI) was 1.88.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.9% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 5

### An optical material:

### <Synthesis of Monomer>

In a reactor that had been internally purged with nitrogen, dicyclopentadiene and indene were sequentially added (a total molar ratio of dicyclopentadiene to indene was 1:3). The reactor was pressurized with nitrogen to 0.05 MPa, and the reaction solution was continuously stirred at 180°C for 4 hours. After completion of the reaction, low-boiling-point impurities were removed by rotary evaporation, followed by one reduced pressure distillation to obtain a white liquid. Finally, the target product, the compound of chemical formula (5), was obtained through one recrystallization purification, with a yield of 83.2%. The purity of the product was determined to be 98.5% by gas chromatography (GC). The structure was characterized by ¹H NMR; the chemical shift of the characteristic peak for the endo-anti isomer of chemical formula (5) was at 5.78 ppm, while the chemical shift of the characteristic peak for the exo-syn isomer was at 6.16 ppm, and the content of the endo-anti isomer was 75%.

### <Ring-Opening Polymerization>

In a reactor that had been internally purged with nitrogen, 28 parts of dicyclopentadiene as a cycloolefin monomer, 55 parts of 8-methyltetracyclo[4.4.0.12,5.17,10]-3-dodecene, and 17 parts of the above-mentioned compound of chemical formula (5) (in which the ratio of the endo-anti isomer was 75%) were added, followed by the addition of 500 parts of toluene, 0.05 part of (1,3-bis-(2,4,6-trimethylphenyl)-2-imidazolidinylidene)dichloro(o-isopropylphenylmethylene)ruthe nium as a catalyst, and 1.2 parts of 1-pentene as a chain transfer agent. And the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 52,000, and the molecular weight distribution (PDI) was 1.91.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.9% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 6

### An optical material:

### <Synthesis of Monomer>

In a reactor that had been internally purged with nitrogen, dicyclopentadiene(half of the total amount of dicyclopentadiene) and indene were sequentially added (a molar ratio of total dicyclopentadiene to indene was 1:3). The reactor was pressurized with nitrogen to 0.05 MPa, the remaining amount of dicyclopentadiene was slowly added dropwise for 1 hour, and the reaction solution was continuously stirred at 180°C for 5 hours. After completion of the reaction, low-boiling-point impurities were removed by rotary evaporation, followed by one reduced pressure distillation to obtain a white liquid. Finally, the target product, the compound of chemical formula (6), was obtained through one recrystallization purification, with a yield of 82.3%. The purity of the product was determined to be 98.2% by gas chromatography (GC). The structure was characterized by ¹H NMR; the chemical shift of the characteristic peak for the endo-anti isomer of chemical formula (6) was at 5.76 ppm, while the chemical shift of the characteristic peak for the exo-syn isomer was at 6.18 ppm, and the content of the endo-anti isomer was 75%.

### <Ring-Opening Polymerization>

In a reactor that had been internally purged with nitrogen, 40 parts of dicyclopentadiene as a cycloolefin monomer, 45 parts of 8-cyclohexyltetracyclo[4.4.0.12,5.17,10]-3-dodecene, and 15 parts of the above-mentioned compound of chemical formula (6) (in which the ratio of the endo-anti isomer was 75%) were added, followed by the addition of 500 parts of cyclooctane, 0.02 part of dichloro[1,3-bis(2,4,6-trimethylphenyl)-2-imidazolidinylidene](benzylidene)bis(3-bromopyridine)r uthenium(II) as a catalyst, and 1.2 parts of 1-pentene as a chain transfer agent. And the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 53,000, and the molecular weight distribution (PDI) was 1.92.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.8% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 7

### An optical material:

### <Synthesis of Monomer>

In a reactor that had been internally purged with nitrogen, dicyclopentadiene(half of the total amount of dicyclopentadiene) and 4-methyl-1H-indene were sequentially added (a molar ratio of total dicyclopentadiene to 4-methyl-1H-indene was 1:4). The reactor was pressurized with nitrogen to 0.05 MPa, the remaining amount of dicyclopentadiene was slowly added dropwise for 1 hour, and the reaction solution was continuously stirred at 200°C for 5 hours. After completion of the reaction, low-boiling-point impurities were removed by rotary evaporation, followed by one reduced pressure distillation to obtain a white liquid. Finally, the target product, the compound of chemical formula (7), was obtained through one recrystallization purification, with a yield of 83.4%. The purity of the product was determined to be 97.8% by gas chromatography (GC). The structure was characterized by ¹H NMR; the chemical shift of the characteristic peak for the endo-anti isomer of chemical formula (7) was at 5.75 ppm, while the chemical shift of the characteristic peak for the exo-syn isomer was at 6.20 ppm, and the content of the endo-anti isomer was 75%.

### <Ring-Opening Polymerization>

In a reactor that had been internally purged with nitrogen, 40 parts of dicyclopentadiene as a cycloolefin monomer, 40 parts of tetracyclo[4.4.0.12,5.17,10]-3-dodecene, and 20 parts of the above-mentioned compound of chemical formula (7) (in which the ratio of the endo-anti isomer was 75%) were added, followed by the addition of 400 parts of toluene, 0.1 part of diethylaluminum, 0.15 part of isobutanol, and 2 parts of 1-pentene as a chain transfer agent. To the mixture, 100.5 parts of a 0.48% molybdenum chloride/toluene solution were added, and the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 32,000, and the molecular weight distribution (PDI) was 1.83.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.8% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 8

### An optical material:

### <Synthesis of Monomer>

In a reactor that had been internally purged with nitrogen, dicyclopentadiene(half of the total amount of dicyclopentadiene) and 1-methylindene were sequentially added (a molar ratio of total dicyclopentadiene to 1-methylindene was 1:4). The reactor was pressurized with nitrogen to 0.05 MPa, the remaining amount of dicyclopentadiene was slowly added dropwise for 1 hour, and the reaction solution was continuously stirred at 200°C for 5 hours. After completion of the reaction, low-boiling-point impurities were removed by rotary evaporation, followed by one reduced pressure distillation to obtain a white liquid. Finally, the target product, the compound of chemical formula (8), was obtained through one recrystallization purification, with a yield of 82.5%. The purity of the product was determined to be 97.8% by gas chromatography (GC). The structure was characterized by ¹H NMR; the chemical shift of the characteristic peak for the endo-anti isomer of chemical formula (8) was at 5.78 ppm, while the chemical shift of the characteristic peak for the exo-syn isomer was at 6.15 ppm, and the content of the endo-anti isomer was 75%.

### <Ring-Opening Polymerization>

In a reactor that had been internally purged with nitrogen, 40 parts of dicyclopentadiene as a cycloolefin monomer, 40 parts of tetracyclo[4.4.0.12,5.17,10]-3-dodecene, and 20 parts of the above-mentioned compound of chemical formula (8) (in which the ratio of the endo-anti isomer was 75%) were added, followed by the addition of 400 parts of toluene, 0.1 part of diethylaluminum, 0.15 part of isobutanol, and 0.6 part of 1-pentene as a chain transfer agent. To the mixture, 100.5 parts of a 0.48% tungsten hexachloride/toluene solution were added, and the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 132,000, and the molecular weight distribution (PDI) was 1.95.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.9% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 9

### An optical material:

### <Synthesis of Monomer>

In a reactor that had been internally purged with nitrogen, dicyclopentadiene(half of the total amount of dicyclopentadiene) and 1,4-dihydronaphthalene were sequentially added (a molar ratio of total dicyclopentadiene to 1,4-dihydronaphthalene was 1:4). The reactor was pressurized with nitrogen to 0.05 MPa, the remaining amount of dicyclopentadiene was slowly added dropwise for 1 hour, and the reaction solution was continuously stirred at 180°C for 2 hours. After completion of the reaction, low-boiling-point impurities were removed by rotary evaporation, followed by one reduced pressure distillation to obtain a white liquid. Finally, the target product, the compound of chemical formula (9), was obtained through one recrystallization purification, with a yield of 79.8%. The purity of the product was determined to be 97.5% by gas chromatography (GC). The structure was characterized by ¹H NMR; the chemical shift of the characteristic peak for the endo-anti isomer of chemical formula (9) was at 5.75 ppm, while the chemical shift of the characteristic peak for the exo-syn isomer was at 6.13 ppm, and the content of the endo-anti isomer was 75%.

### <Ring-Opening Polymerization>

In a reactor that had been internally purged with nitrogen, 40 parts of dicyclopentadiene as a cycloolefin monomer, 45 parts of 8-cyclohexyltetracyclo[4.4.0.12,5.17,10]-3-dodecene, and 15 parts of the above-mentioned compound of chemical formula (9) (in which the ratio of the endo-anti isomer was 75%) were added, followed by the addition of 500 parts of cyclooctane, 0.02 part of dichloro[1,3-bis(2,4,6-trimethylphenyl)-2-imidazolidinylidene](benzylidene)bis(3-bromopyridine)r uthenium(II) as a catalyst, and 1.8 parts of 1-pentene as a chain transfer agent. And the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 36,000, and the molecular weight distribution (PDI) was 1.85.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.9% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 10

### An optical material:

### <Synthesis of Monomer>

In a reactor that had been internally purged with nitrogen, dicyclopentadiene(half of the total amount of dicyclopentadiene) and 1,5-cyclooctadiene were sequentially added (a molar ratio of total dicyclopentadiene to 1,5-cyclooctadiene was 1:3). The reactor was pressurized with nitrogen to 0.05 MPa, the remaining amount of dicyclopentadiene was slowly added dropwise for 1 hour, and the reaction solution was continuously stirred at 200°C for 5 hours. After completion of the reaction, low-boiling-point impurities were removed by rotary evaporation, followed by one reduced pressure distillation to obtain a white liquid. Finally, the target product, the compound of chemical formula (10), was obtained through one recrystallization purification, with a yield of 81.3%. The purity of the product was determined to be 96.8% by gas chromatography (GC). The structure was characterized by ¹H NMR; the chemical shift of the characteristic peak for the endo-anti isomer of chemical formula (10) was at 5.78 ppm, while the chemical shift of the characteristic peak for the exo-syn isomer was at 6.16 ppm, and the content of the endo-anti isomer was 75%.

### <Ring-Opening Polymerization>

In a reactor that had been internally purged with nitrogen, 40 parts of dicyclopentadiene as a cycloolefin monomer, 45 parts of 8-cyclohexyltetracyclo[4.4.0.12,5.17,10]-3-dodecene, and 15 parts of the above-mentioned compound of chemical formula (10) (in which the ratio of the endo-anti isomer was 75%) were added, followed by the addition of 500 parts of cyclooctane, 0.02 part of dichloro[1,3-bis(2,4,6-trimethylphenyl)-2-imidazolidinylidene](benzylidene)bis(3-bromopyridine)r uthenium(II) as a catalyst, and 0.8 part of 1-pentene as a chain transfer agent. And the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 117,000, and the molecular weight distribution (PDI) was 1.91.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.9% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 11

### An optical material:

### <Synthesis of Monomer>

In a reactor that had been internally purged with nitrogen, dicyclopentadiene and indene were sequentially added (a total molar ratio of dicyclopentadiene to indene was 1:4). The reactor was pressurized with nitrogen to 0.05 MPa, and the reaction solution was continuously stirred at 160°C for 2 hours. After completion of the reaction, low-boiling-point impurities were removed by rotary evaporation, followed by one reduced pressure distillation to obtain a white liquid. Finally, the target product, the compound of chemical formula (11), was obtained through secondary recrystallization purification, with a yield of 82.6%. The purity of the product was determined to be 98.5% by gas chromatography (GC). The structure was characterized by ¹H NMR; the chemical shift of the characteristic peak for the endo-anti isomer of chemical formula (11) was at 5.83 ppm, while the chemical shift of the characteristic peak for the exo-syn isomer was at 6.10 ppm, and the content of the endo-anti isomer was 83%.

### <Ring-Opening Polymerization>

In a reactor that had been internally purged with nitrogen, 43 parts of dicyclopentadiene as a cycloolefin monomer, 35 parts of tetracyclo[4.4.0.12,5.17,10]-3-dodecene, and 22 parts of the above-mentioned compound of chemical formula (11) (in which the ratio of the endo-anti isomer was 83%) were added, followed by the addition of 500 parts of toluene, 0.02 part of dichloro[1,3-bis(2,4,6-trimethylphenyl)-2-imidazolidinylidene](benzylidene)bis(3-bromopyridine)r uthenium(II) as a catalyst, and 1.2 parts of 1-hexene as a chain transfer agent. And the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 52,000, and the molecular weight distribution (PDI) was 1.87.

### <Hydrogenation>

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.9% by ¹H NMR.

### <Post-treatment and Molding>

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Example 12

### An optical material:

### <Synthesis of Monomer>

In a reactor that had been internally purged with nitrogen, dicyclopentadiene(1/2 of the total amount of dicyclopentadiene) and tetrahydroindene were sequentially added (a total molar ratio of dicyclopentadiene to tetrahydroindene was 1:3). The reactor was pressurized with nitrogen to 0.05 MPa, the remaining 1/2 amount of dicyclopentadiene was added dropwise for 1 hour, and the reaction solution was continuously stirred at 200°C for 5 hours. After completion of the reaction, the reaction solution was transferred to a round-bottom flask, where low-boiling-point impurities were first removed by rotary evaporation, followed by a purification treatment of secondary reduced pressure distillation to obtain a white liquid. Finally, the target product, the compound of chemical formula (2), was obtained through secondary recrystallization purification, with a yield of 79%. The purity of the product was determined to be 98.5% by gas chromatography (GC). The structure was characterized by ¹H NMR; the chemical shift of the characteristic peak for the endo-anti isomer of chemical formula (2) was at 5.75 ppm, while the chemical shift of the characteristic peak for the exo-syn isomer was at 6.14 ppm, and the content of the endo-anti isomer was 93%.

### <Ring-Opening Polymerization>

In a reactor that had been internally purged with nitrogen, 0.02 part of dichloro[1,3-bis(2,4,6-trimethylphenyl)-2-imidazolidinylidene](benzylidene)bis(3-bromopyridine)r uthenium(II) as a catalyst, 500 parts of toluene as a solvent, 43 parts of dicyclopentadiene as a cycloolefin monomer, 35 parts of tetracyclo[4.4.0.12,5.17,10]-3-dodecene, 22 parts of the above-mentioned compound of chemical formula (2) (in which the ratio of the endo-anti isomer was 93%), and 1.2 parts of 1-hexene as a chain transfer agent were added, and the reaction solution was stirred at 60°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 53,000, and the molecular weight distribution (PDI) was 1.84.

### <Hydrogenation>

The obtained ring-opening polymer was transferred to a pressure-resistant hydrogenation reactor, and 0.5 part of palladium-on-carbon catalyst (produced by Adamas, wet basis: 55%, palladium loading: 10%) as a hydrogenation catalyst was added. A hydrogenation reaction was conducted at a hydrogen pressure of 4.5 MPa and a temperature of 160°C for 6 hours. The hydrogenation rate of the resulting hydrogenated product was determined to be 99.9% by ¹H NMR.

### <Post-treatment and Molding>

After the completion of the hydrogenation reaction, 0.1 part of pentaerythritol tetrakis[3-(3,5-di-tert-butyl-4-hydroxyphenyl)propionate] as an antioxidant was added, and drying was performed in a vacuum oven (180°C, 1 Torr) for 10 hours to obtain the optical material. Subsequently, measurements and evaluations were conducted, and the results are shown in Table 1.

### Comparative Example 1

### An optical material:

In a reactor that had been internally purged with nitrogen, 45 parts of dicyclopentadiene as a cycloolefin monomer, 30 parts of 8-methyltetracyclo[4.4.0.12,5.17,10]-3-dodecene, and 25 parts of the above-mentioned compound of chemical formula (1) in Example 1 (in which the ratio of the endo-anti isomer was 75%) were added, followed by the addition of 400 parts of toluene, 0.1 part of triisobutylaluminum, 0.15 part of isobutanol, and 3.5 parts of 1-hexene as a chain transfer agent. To the mixture, 100.5 parts of a 0.48% tungsten hexachloride/toluene solution were added, and the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 15,000, and the molecular weight distribution (PDI) was 1.88.

Next, the obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.5% by ¹H NMR.

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Comparative Example 2

### An optical material:

In a reactor that had been internally purged with nitrogen, 45 parts of dicyclopentadiene as a cycloolefin monomer, 30 parts of 8-methyltetracyclo[4.4.0.12,5.17,10]-3-dodecene, and 25 parts of the above-mentioned compound of chemical formula (1) in Example 1 (in which the ratio of the endo-anti isomer was 75%) were added, followed by the addition of 400 parts of toluene, 0.1 part of triisobutylaluminum, 0.15 part of isobutanol, and 0.3 part of 1-hexene as a chain transfer agent. To the mixture, 100.5 parts of a 0.48% tungsten hexachloride/toluene solution were added, and the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 189,000, and the molecular weight distribution (PDI) was 2.11.

Next, the obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 180°C for 10 hours. The hydrogenation rate of the resulting hydrogenated product was determined to be 98.5% by ¹H NMR.

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Comparative Example 3

### An optical material:

In a reactor that had been internally purged with nitrogen, dicyclopentadiene(half of the total amount of dicyclopentadiene) and tetrahydroindene were sequentially added (a molar ratio of total dicyclopentadiene to tetrahydroindene was 1:3). The reactor was pressurized with nitrogen to 0.05 MPa, the remaining amount of dicyclopentadiene was added dropwise for 1 hour, and the reaction solution was continuously stirred at 200°C for 5 hours, and then continuously stirred at 250°C for 7 days. After completion of the reaction, low-boiling-point impurities were removed by rotary evaporation, followed by one reduced pressure distillation to obtain the target product compound of chemical formula (2), with a yield of 83%. The purity of the product was determined to be 99.2% by gas chromatography (GC). The structure was characterized by ¹H NMR; the chemical shift of the characteristic peak for the endo-anti isomer of chemical formula (2) was at 5.78 ppm, while the chemical shift of the characteristic peak for the exo-syn isomer was at 6.12 ppm, and the content of the endo-anti isomer was 68%.

In a reactor that had been internally purged with nitrogen, 43 parts of dicyclopentadiene as a cycloolefin monomer, 35 parts of tetracyclo[4.4.0.12,5.17,10]-3-dodecene, and 22 parts of the above-mentioned compound of chemical formula (2) (in which the ratio of the endo-anti isomer was 68%) were added, followed by the addition of 500 parts of toluene, 0.02 part of dichloro[1,3-bis(2,4,6-trimethylphenyl)-2-imidazolidinylidene](benzylidene)bis(3-bromopyridine)r uthenium(II) as a catalyst, and 1.2 parts of 1-hexene as a chain transfer agent. And the reaction solution was stirred at 55°C for 2 hours or more to conduct ring-opening polymerization.

After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 53,000, and the molecular weight distribution (PDI) was 1.91.

The obtained ring-opening polymer was transferred to a pressure-resistant hydrogenation reactor, and 0.5 part of alumina-supported palladium (produced by Adamas, wet basis: 55%, palladium loading: 10%) as a catalyst was added. A hydrogenation reaction was conducted at a hydrogen pressure of 4.5 MPa and a temperature of 160°C for 6 hours. The hydrogenation rate of the resulting hydrogenated product was determined to be 99.5% by 1H NMR.

After the completion of the hydrogenation reaction, 0.1 part of the antioxidant octadecyl β-(3,5-di-tert-butyl-4-hydroxyphenyl)propionate was added, and drying was performed in a vacuum oven (180°C, 1 Torr) for 10 hours to obtain the optical material. Subsequently, measurements and evaluations were conducted, and the results are shown in Table 1.

### Comparative Example 4

### An optical material:

### <Ring-Opening Polymerization>

In a reactor that had been internally purged with nitrogen, 40 parts of dicyclopentadiene as a cycloolefin monomer, 60 parts of tetracyclo[4.4.0.12,5.17,10]-3-dodecene, and 400 parts of cyclohexane as a solvent were added. Subsequently, 0.1 part of diethylaluminum, 0.1 part of isobutanol, and 1.3 parts of 1-hexene as a chain transfer agent were added to the reactor, followed by the addition of 100.5 parts of a 0.48% molybdenum chloride solution (added in the form of a 0.48% molybdenum chloride/cyclohexane solution), and the reaction solution was stirred at 55°C for 2 hours or more to conduct ring-opening polymerization. After the completion of the polymerization, the polymerization conversion rate of the monomer as determined by gas chromatography was 100% at the end of the polymerization; the weight-average molecular weight (Mw) of the resulting ring-opening polymer as determined by gel permeation chromatography was 53,000, and the molecular weight distribution (PDI) was 1.87.

### <Hydrogenation>

The obtained ring-opening polymer was transferred to a pressure-resistant hydrogenation reactor, and 1.4 parts of a diatomaceous earth supported nickel catalyst (produced by Gansu Zhongke Yaoyuan Bioengineering Co., Ltd., nickel loading: 55%) as a catalyst and 167 parts of cyclohexane were added. A hydrogenation reaction was conducted at a hydrogen pressure of 4.6 MPa and a temperature of 180°C for 20 hours to obtain a reaction solution of the hydrogenated ring-opening polymer. The reaction solution was passed through a 300-mesh filter bed and subjected to pressure filtration under a pressure of 0.25 MPa to remove the hydrogenation catalyst, thereby obtaining a colorless and transparent solution. The hydrogenation rate of the resulting hydrogenated product was determined to be 99.5% by ¹H NMR.

### <Post-treatment and Molding>

After the completion of the hydrogenation reaction, 0.1 parts of the antioxidant octadecyl β-(3,5-di-tert-butyl-4-hydroxyphenyl)propionate were added. Subsequently, filtration was performed using an additional metal fiber filter (produced by Nichidai Corporation, pore size: 0.4 µm) to remove minute solid components.

Subsequently, the solution obtained by the filtration was treated by rotary evaporation under vacuum to remove the solvent cyclohexane and other volatile components therefrom. Then, the rotary evaporation concentrated solution was poured into a mold directly connected to the concentrator, and the solid components contained in the solution were extruded in a molten state and cooled to obtain the optical material. Subsequently, measurements and evaluations were conducted, and the results are shown in Table 1.

**Table 1 Measurement data of the above-mentioned Example 1 and Comparative Example 1.**

| | Monomer 1 | Monomer 2 | Monomer 3 | Ratio of the endo- anti isomer (%) | Weight-A verage Molecular Weight (Mw) | Molecular Weight Distribution (PDI) | Glass Transition Temperature (°C) | Refractive Index | Transmittance (3mm , %) | Yield Strength (MPa) |
|---|---|---|---|---|---|---|---|---|---|---|
| Example 1 | 45 | 30 | 25 | 75 | 53000 | 1.92 | 135.8 | 1.53 | 91 | 83 |
| Example 2 | 40 | 40 | 20 | 75 | 52000 | 1.85 | 134.4 | 1.53 | 92 | 75 |
| Example 3 | 38 | 55 | 7 | 75 | 50000 | 1.82 | 137.2 | 1.54 | 93 | 63 |
| Example 4 | 43 | 35 | 22 | 75 | 52000 | 1.88 | 132.9 | 1.52 | 91 | 82 |
| Example 5 | 28 | 55 | 17 | 75 | 52000 | 1.91 | 137.4 | 1.52 | 94 | 64 |
| Example 6 | 40 | 45 | 15 | 75 | 53000 | 1.92 | 136.2 | 1.54 | 92 | 69 |
| Example 7 | 40 | 40 | 20 | 75 | 32000 | 1.83 | 135.5 | 1.53 | 92 | 78 |
| Example 8 | 40 | 40 | 20 | 75 | 132000 | 1.95 | 135.1 | 1.53 | 90 | 76 |
| Example 9 | 40 | 45 | 15 | 75 | 36000 | 1.85 | 136.5 | 1.53 | 92 | 67 |
| Example 10 | 40 | 45 | 15 | 75 | 117000 | 1.9 | 135.7 | 1.52 | 90 | 67 |
| Example 11 | 43 | 35 | 22 | 83 | 52000 | 1.87 | 132.8 | 1.54 | 92 | 84 |
| Example 12 | 43 | 35 | 22 | 93 | 53000 | 1.84 | 133.3 | 1.54 | 93 | 85 |
| Comparative Example 1 | 45 | 30 | 25 | 75 | 15000 | 1.88 | 125.4 | 1.5 | 90 | 44 |
| Comparative Example 2 | 45 | 30 | 25 | 75 | 189000 | 2.11 | 127.8 | 1.47 | 85 | 50 |
| Comparative Example 3 | 43 | 35 | 22 | 68 | 53000 | 1.91 | 115.8 | 1.48 | 88 | 53 |
| Comparative Example 4 | 40 | 60 | 0 | / | 53000 | 1.87 | 133.6 | 1.51 | 92 | 48 |

In the above table, Monomer 1 refers to dicyclopentadiene compounds used to provide the structural unit (A) constituting the cycloolefin copolymer; Monomer 2 refers to tetracyclododecene and derivatives thereof used to provide the structural unit (B) constituting the cycloolefin copolymer; and Monomer 3 refers to the compound monomer conforming to structural formula (1) used to provide the structural unit (C) constituting the cycloolefin copolymer.

It can be seen from Examples 1-12 that the optical materials provided by the present disclosure all exhibit high Tg (Tg > 130 °C), high transparency (transmittance > 90%), high refractive index (> 1.5), and high yield strength (≥63MPa). By comparing Examples 1-12 with Comparative Example 4, it can be found that the introduction of the structural units from the compound of structural formula (1) can significantly improve the yield strength of the resulting optical materials under the premise that the glass transition temperature and transparency are not significantly affected. By comparing Examples 2, 7, 8 and Examples 6, 9, 10, it can be found that when the weight-average molecular weight of the cycloolefin copolymer is controlled between 20,000 and 150,000, the obtained optical materials all possess high Tg, high transparency, high refractive index, and high yield strength. Similarly, through simultaneous comparison with Comparative Examples 1 and 2, it is found that when the molecular weight is lower than 20,000 or higher than 150,000, both the glass transition temperature and yield strength of the obtained optical materials show a significant downward trend; thus, the present disclosure has achieved remarkably significant progress. By comparing Examples 4, 11, and 12 with Comparative Example 3, it can be found that when the ratio of the endo-anti isomer in the compound of structural formula (1) is greater than 70%, the transparency of the resulting optical material is improved to a certain extent, and meanwhile, the yield strength is significantly enhanced, increasing by nearly 60-80%; the present invention has achieved remarkably significant progress. Furthermore, by comparing Examples 1, 2, 5 and Example 6, it can be found that appropriately reducing the proportion of the tetracyclododecene structural unit (on the basis of not affecting the transparency of the material) can significantly improve the yield strength of the resulting optical material under the premise of slightly decreasing the glass transition temperature.

The optical material provided by the present disclosure possesses high transparency, high heat resistance, and high yield toughness, and is easy to process and mold, by controlling the proportions of various structural units and the ratio of the endo-anti isomer in the compound of structural formula (1). The optical material of the present disclosure is suitable for use as an optical component such as an optical lens, a prism, a light guide, and a camera module, etc., and is particularly suitable for use as an optical component such as a lens for a camera installed inside an automobile.

## Claims

1. An optical material, comprising a cycloolefin ring-opening hydrogenated copolymer, **characterized in that** all structural units of the cycloolefin ring-opening hydrogenated copolymer comprise in percentage by mass: a structural unit derived from a dicyclopentadiene compound in a ratio of 20% to 45%, a structural unit derived from tetracyclododecene and a derivative thereof in a ratio of 30% to 55%, and a structural unit derived from a compound of structural formula (1) in a ratio of 5% to 25%, a ratio of an endo-anti isomer in the compound of structural formula (1) is 70% or more; 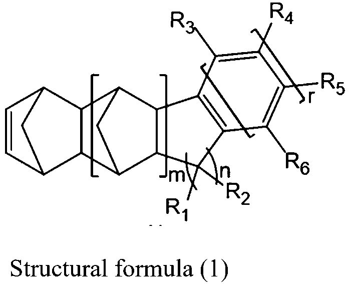 in the structural formula (1), n represents 0 to 10, m represents 0, 1, or 2, and r represents 0, 1, 2, or 3; in the structural formula (1), each of R₁ to R₆ independently represents a hydrogen atom, a hydrocarbon group having 1 to 20 carbon atoms, a halogen atom other than a fluorine atom, or a hydrocarbon group having 1 to 20 carbon atoms substituted with a halogen atom other than a fluorine atom.

2. The optical material according to claim 1, **characterized in that** the ratio of the endo-anti isomer in the compound of structural formula (1) is 80% or more.

3. The optical material according to claim 1, **characterized in that** in the structural formula (1), when r=0 or 1, one pair or several pairs among R₃ and R₄, R₄ and R₅, and R₅ and R₆ are optionally bonded to each other to form a monocyclic or polycyclic ring.

4. The optical material according to claim 1, **characterized in that** in the structural formula (1), when r=2 or 3, one pair or several pairs among R₃ and R₃, R₃ and R₄, R₄ and R₅, R₅ and R₆, and R₆ and R₆ are optionally bonded to each other to form a monocyclic or polycyclic ring.

5. The optical material according to claims 3 or 4, **characterized in that** the monocyclic or polycyclic ring and R₁ or R₂ are optionally bonded to each other to form a monocyclic or polycyclic ring.

6. The optical material according to claim 5, **characterized in that** the monocyclic or polycyclic ring is an aliphatic ring or an aromatic ring.

7. The optical material according to claim 1, **characterized in that** a weight-average molecular weight of the cycloolefin ring-opening hydrogenated copolymer is 20,000 to 150,000.

8. The optical material according to claim 1, **characterized in that** all structural units of the cycloolefin ring-opening hydrogenated copolymer comprise in percentage by mass: the structural unit derived from the dicyclopentadiene compound in a ratio of 25% to 43%, the structural unit derived from tetracyclododecene and the derivative thereof in a ratio of 33% to 52%, and the structural unit derived from the compound of structural formula (1) in a ratio of 10% to 23%.

9. The optical material according to claim 1, **characterized in that** the tetracyclododecene and the derivative thereof comprise at least one compound selected from the group consisting of tetracyclo[4.4.0.12,5.17,10]-3-dodecene, 8-methoxycarbonyltetracyclo[4.4.0.12,5.17,10]-3-dodecene, 8-ethoxycarbonyltetracyclo[4.4.0.12,5.17,10]-3-dodecene, 8-n-propoxycarbonyltetracyclo[4.4.0.12,5.17,10]-3-dodecene, 8-isopropoxycarbonyltetracyclo[4.4.0.12,5.17,10]-3-dodecene, 8-n-butoxycarbonyltetracyclo[4.4.0.12,5.17,10]-3-dodecene, 8-phenoxycarbonyltetracyclo[4.4.0.12,5.17,10]-3-dodecene, 8-methyl-8-methoxycarbonyltetracyclo[4.4.0.12,5.17,10]-3-dodecene, 8-methyl-8-ethoxycarbonyltetracyclo[4.4.0.12,5.17,10]-3-dodecene, 8-methyl-8-n-propoxycarbonyltetracyclo[4.4.0.12,5.17,10]-3-dodecene, 8-methyl-8-isopropoxycarbonyltetracyclo[4.4.0.12,5.17,10]-3-dodecene, 8-methyl-8-n-butoxycarbonyltetracyclo[4.4.0.12,5.17,10]-3-dodecene, 8-methyltetracyclo[4.4.0.12,5.17,10]-3-dodecene, 8-cyclohexyltetracyclo[4.4.0.12,5.17,10]-3-dodecene, 8-methyl-8-(4-phenylphenoxy)carbonyltetracyclo[4.4.0.12,5.17,10]-3-dodecene, and 8-ethylidenetetracyclo[4.4.0.12,5.17,10]-3-dodecene.

10. The optical material according to claim 1, **characterized in that** the dicyclopentadiene compound comprises at least one compound selected from the group consisting of dicyclopentadiene, methyldicyclopentadiene, dimethyldicyclopentadiene, ethyldicyclopentadiene, vinyldicyclopentadiene, and propenyldicyclopentadiene.
